# EUROPEAN PATENT APPLICATION

(11) **EP 1 457 382 A2**
(43) Date of publication of application: **15.09.2004**
(21) Application number: 04251447.1
(22) Date of filing: 12.03.2004
(51) Int. Cl.: B60P 1/44

(54) **Anti-trap device for a lift platform**

(30) Priority: 13.03.2003 GB 0305761
(71) Applicant: The Ray Smith Group Plc, Peterborough, Cambridgeshire, PE1 5XG (GB)
(72) Inventor: Holland, John, Peterborough Cambridgeshire PE1 5XG (GB)
(74) Representative: Wood, Graham

(57) **Abstract**

The invention relates to the provision of sensing means (20) for use in conjunction with a platform (8) fitted to a vehicle (6). The platform (8) is of the type which is typically used to allow goods and/or a person to be moved when standing on a top surface (12) of the platform. The platform is provided with sensing means (20) which allow the presence of a person or goods to be sensed on a particular location, typically towards the edge of the platform adjacent the vehicle (6), which sensing means, when activated, cause immobilisation of the platform so as to prevent the trapping of the goods or person.

## Description

The invention to which this application relates is to an improvement in the provision of lifting platforms of a type which are typically mounted on vehicles or trailers such as mounted on the rear of goods vehicles, ambulances and trailers for towing by vehicles and hereinafter referred to in a non limiting manner as vehicles and trailers. The lifting platform, or tail lift as it is commonly known, is typically provided to move between at least a horizontal position substantially in line with the floor of the vehicle or trailer and a horizontal position substantially in line with a lower surface to allow the transfer of goods between the vehicle or trailer and the said lower surface. Furthermore the platform is also provided to be movable between the horizontal in-use conditions, and a storage condition.

There are many different variations on vehicle or trailer lift platforms currently in use. One known type of platform is called a cantilever platform in which the platform is supported by one or more arms which are provided in a cantilever arrangement from the underside of the vehicle or trailer. In a storage position, the platform is stored under or adjacent to the end of the vehicle or trailer and can be moved to an in-use position by the arms extending outwardly from the end of the trailer and then upwardly or downwardly as required to move the platform between different horizontal positions.

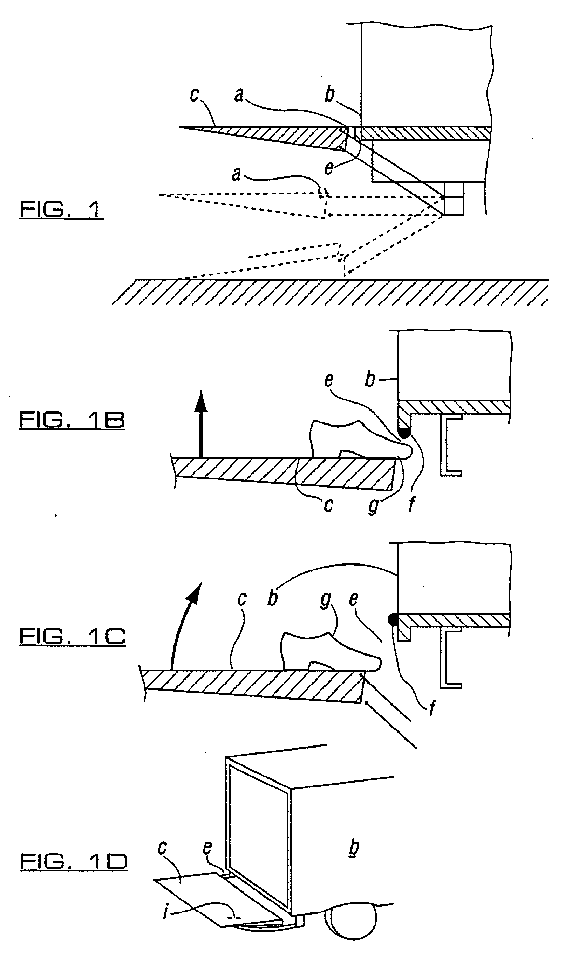

Lift platforms, are used extensively for loading and unloading of goods to and from the vehicle or trailer and, due to their extensive use, the use and provision of the same are covered by European and British Safety Standards to which the manufacturers of the tail lifts are obliged to conform. A relatively recent safety standard has been introduced which attempts to minimise, amongst many other issues, the danger of a person using the tail lift having their feet or toes trapped between the edge of the tail lift platform adjacent the vehicle or trailer and the vehicle or trailer itself. It is known that this is a particularly dangerous area and that there have been occurrences of persons suffering severe injury to their feet due to such trapping. The Standards documents set out recommendations to the tail-lift manufacturers some of which are shown with reference to the prior art illustrated with respect to Figures 1A to C

In Figure 1A, there is illustrated a first known system whereby a mechanical toeguard (a) is provided which, when the tail-lift platform is moved to be positioned relatively close to the edge of the vehicle or trailer (b), is actuated to lie at an angled or vertical position between the edge of the tail lift (c) and the vehicle or trailer (b) so as to close the gap (e) between the two and hence prevent the passage of a foot into the gap. In practise, this is found to be effective with regard to some models or makes of tail-lift platform but has the disadvantage in that it is not possible to utilise the same as a solution for all platform designs.

Figures 1B-C illustrates a further embodiment of the known system whereby a sensing means (f) is mounted on the vehicle or trailer (b) such that when the sensing means is contacted by a foot (g) or other item, the drive means for movement of the platform is sent a signal and, as a result, movement of the platform is subsequently prevented. In use, this system is found to be unworkable in that by the time the person's foot has come into contact with the sensing means mounted on the vehicle or trailer, the gap (e) is so small that, due to the inertia and inevitable time lag between the sensing and stopping of the drive means, severe injury will already have been caused to the person's foot as the drive means cannot be stopped sufficiently quickly to prevent the gap from closing further.

A yet further embodiment is illustrated in Figure 1D wherein the controls (1) for control of movement of the platform (c) are mounted in a recessed position at a location on the platform (c) which is remote from the platform edge and hence gap (e) adjacent the vehicle or trailer (b). The idea behind this system is that by forcing the person using the controls to stand at a position where the foot controls are provided on the platform, they subsequently have no risk of having their feet positioned at the edge of the platform adjacent the vehicle or trailer and indeed, in practise, this is found to be the case. However, what the system does not take into account are the frequent situations whereby more than one person is on the platform helping to load and unload the goods and this system does not provide any solution to the possibility of the second person, who is not using the foot controls for movement of the platform, having their feet trapped and injured in the gap (e) between the edge of the platform and the vehicle or trailer.

It will therefore be appreciated that the solutions described above, which, given their inclusion in the recently issued British and European Standards, can be taken to represent the closest prior art, do not meet the practical requirements for safety and utilisation of these platforms. This in turn means that many platforms which are currently made may not meet British Safety, Standards and, the lift platforms cannot in fact be offered for sale.

The aim of the present invention is to provide a tail-lift system whereby the risk of injury to the feet of persons on the platform during use, can be minimised to an extent so as to allow the tail-lift platform and indeed the tail-lift itself to meet the British and European Standards for operation.

In a first aspect of the invention, there is provided a lift platform assembly for a vehicle, said assembly including a platform, which is movable, said platform mounted at the rear or side of the vehicle and having a top surface on which a person(s) and/or goods can stand and/or be placed, and control means to allow operator control of drive means which drive the movement of the platform and characterised in that the platform is provided with sensing means to detect the presence of part of a person's anatomy and/or article at a predetermined location on said platform.

In one embodiment, the sensing means are linked to the control means for the drive for the platform such that when the sensing means are inactive, the drive means can operate in response to the user control selections but, when the sensing means is activated, a signal is transmitted to the control means, which signal is converted and causes the drive means to stop movement. Preferably, the movement of the drive means is stopped instantaneously upon receiving a signal from the sensing means.

Typically, the sensing means are provided so as to be operative substantially continuously across the width of the platform.

Typically the sensing means are offset a distance from the said edge of the platform with the distance of the offset being calculated such that the sensing means lie at the most easily activated and/or sensitive position.

In a preferred embodiment, the sensing means are activated by the application of pressure thereon and the sensing means are substantially flush with the upper surface of the platform thereby preventing the same from causing an obstruction and minimising the possibility of damage to the same. By positioning the sensing means as close to the edge as possible while still ensuring that the same can be easily activated, so the remainder of the platform is available for use in a normal fashion and the sensing means prevented from causing unnecessary and potentially irritating stopping of the drive of the platform.

In one embodiment, if the platform is manufactured from aluminium extrusions, the extrusion includes a recessed channel into which the sensing means can be located and retained. Alternatively, if the platform is formed from sheet material such as sheet steel or the like, then a channel or location means for the sensing means is formed on the platform fabrication. Typically, the signal transmitted from the sensing means when activated is an electrical data signal which passes to the control means via cable connection or remote signal transmission. The drive means utilised is typically a hydraulic drive with a hydraulic control system which is stopped once the signal is received from the sensing means.

In one embodiment, the sensing means comprises an elongate member or series of portions so provided to form an elongate member, said elongate member having therein a housing along the length thereof for the reception of electrical contact means, said contact means being normally held in an open position but, upon pressure being applied to deform the elongate member, the electrical contact means are moved together to close the same and cause the generation of the signal to the drive means.

In one embodiment there is provided a lift platform assembly for a vehicle or trailer, said assembly including a platform, which is movable between at least two substantially horizontal planes, said platform mounted at the rear or side of the goods storage trailer and control means to allow operator control of the drive means which drive the movement of the platform between the at least two horizontal planes and wherein the platform has mounted thereon, sensing means, said sensing means provided to detect the presence of a person's anatomy and/or article at or in the vicinity of that edge of the platform which lies adjacent the vehicle or trailer.

Specific embodiments of the invention are now described with reference to the accompanying drawings, wherein:-
Figure 2 illustrates a cantilever type tail-lift fitted with the invention according to one embodiment;
Figure 3 illustrates in more detail, the platform of the tail-lift of Figure 1;
Figure 4 illustrates a cross-sectional view through a portion of the platform of Figure 3 along line A-A; and
Figures 5a and b illustrate the use of the platform in accordance with one embodiment of the invention.

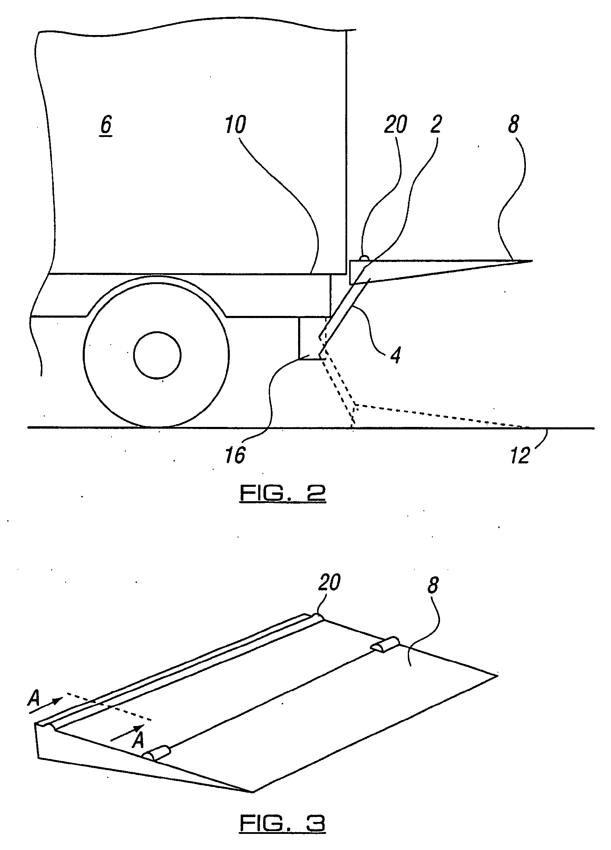

Referring firstly to Figure 2, there is illustrated a typical cantilever tail-lift assembly, said assembly comprising hydraulically actuated arms 2, 4 which, as indicated by broken lines, can move outwardly from the rear of a goods storage trailer 6 to move a platform 8 between different horizontal planes. For example, the platform can move between a horizontal plane substantially in line with the floor 10 of the goods storage trailer and a horizontal plane adjacent the surface 12 so as to allow goods to be mounted on the platform and the surface 12 so as to allow goods to be mounted on the platform and then moved between the two positions or indeed any other positions within the range of movement of the platform. The platform can also be moved to a retracted position either lying vertically at the end of the vehicle or trailer or may fold to lie at or under the vehicle or trailer and this can occur in a conventional manner. The arms are typically activated by a hydraulic drive system which is controlled by control means 16 mounted on the vehicle or trailer. The actual use controls can be any of a range of devices and can be selected to suit particular user requirements and are therefore not described in any particular detail.

In accordance with the invention, the lift platform further includes a sensing means 20, said sensing means running along the width of the platform as indicated in both Figures 2 and 3 and, preferably in a continuous manner so as to ensure that the entire width of the trailer is covered by the sensing means. The sensing means are in turn connected to the control means by cabling, not shown, which allows the transfer of a data signal from the sensing means to the control means when activated. Upon receiving the control signal, the movement of the platform by the hydraulic drive system is immediately stopped.

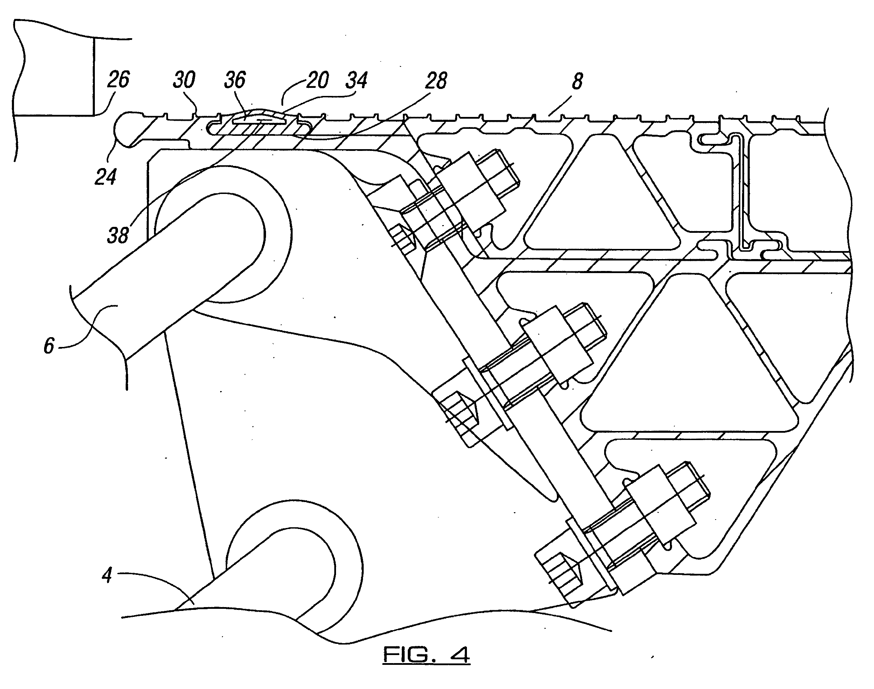

Referring now to Figure 4 there is provided a cross section through the line A-A of the edge portion 24 of the platform which lies adjacent the end 26 of the vehicle or trailer. In this cross section, which is a cross section of a platform formed from aluminium extrusion, there is illustrated the sensing means 20, also in cross section, and it is shown how the same are mounted in a recess channel 28. This recess channel serves to retain the sensing means in position and also allows the sensing means to be substantially flush with the top surface 30 of the platform. However, there is a raised portion in the form of part of the housing 34 of the sensing means which is typically formed of rubber or other similarly resilient but deformable material.

Positioned within the housing are electrical contacts 36, 38 which, in the position shown, are in an open position thereby ensuring that no electrical contact is made between the two contacts and hence no signal is transmitted from the sensing means to the control means. However, if the top surface of the sensing means is depressed and deformed as indicated by the broken lines 40, pressure is applied to the electrical contacts 36, 38 which causes the same to come together and form the electrical contact and hence generate the signal to the control means.

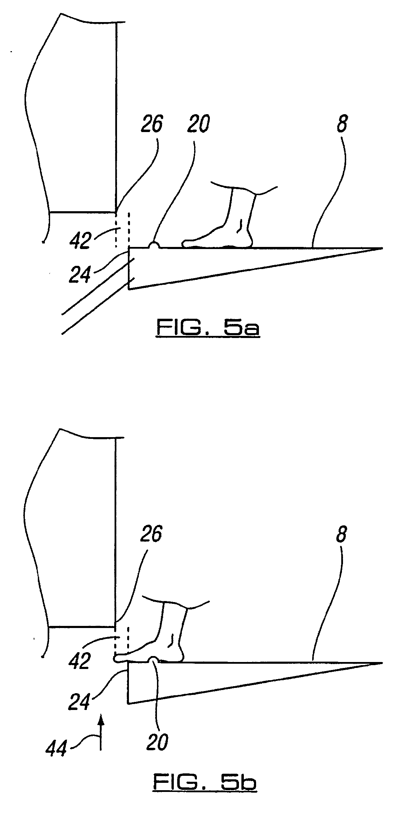

Figures 5a and b illustrate the invention in use showing, in schematic form, the lift system in accordance with the invention in one embodiment.

In Figures 5a and b, the feet of a person standing on the platform are shown, the edge of the platform adjacent the vehicle or trailer edge and the sensing means are also shown. In Figure 5a, the persons feet are well spaced away from the edge of the platform and therefore are well removed from the gap 42 which exists between the edge of the vehicle or trailer and the edge of the platform. As a result, the feet do not lie on the sensing means 20 and the control means for the platform allow the normal and conventional movement of the platform to occur but at the same time, ensuring that the operator's position on the platform is safe.

In Figure 5b, the same components are again shown but in this case the operator's feet are positioned at and overlying the edge of the platform so that the same are in a dangerous position with respect to the gap 42 which can exist between the edge of the platform and the end of the vehicle or trailer and which gap can be closed as the platform moves upwardly as indicated by the arrow 44 from the platform position shown. It will readily be appreciated that if, in the example shown at Figure 5b, the platform continues to move upwardly, the operator's toes, at least, will be trapped and may very well be cut off. However, in accordance with the present invention, the subsequent upward movement of the platform is not possible as the position of the operator's feet mean that the same are in contact with the sensing means 20 and hence apply pressure onto the same. This pressure, in turn, causes an electrical contact to be made as described previously and causes a signal to be transmitted to the control means. When the control means receives the signal, the movement of the platform is immediately stopped and will not be recommenced until the operator moves their feet away from the edge and hence off the sensing means 20 and subsequently keeps away from the edge of the platform.

It should be noted that once the operator removes their feet from the sensing means for a period of time, the use of the control means can again be commenced in a normal manner and no re-setting of the system is required. However, should the operator again move their feet back into the dangerous position the control means will again be stopped.

It should also be noted that although the specific embodiments describe the use of the invention with a cantilever style of lift platform or tail lift, the invention can equally be used, and be of advantage, with any type of lift platform or tail lift, in order to prevent or minimise the risk of physical injury or indeed the risk of damage to goods which could be caused if the invention herein described is not provided.

The invention therefore provides an effective and efficient manner of minimising injury risk to operators on a tail lift platform.

## Claims

1. A lift platform assembly for a vehicle, said assembly including a platform, which is movable, said platform mounted at the rear or side of the vehicle and having a top surface on which a person(s) and/or goods can stand and/or be placed, and control means to allow operator control of drive means which drive the movement of the platform and **characterised in that** the platform is provided with sensing means to detect the presence of part of a person's anatomy and/or article at a predetermined location on said platform.

2. An assembly according to claim 1 **characterised in that** the sensing means are linked to the control means for the drive means such that when the sensing means are inactive, the platform is movable in response to the user control selections but when the sensing means are activated, the platform is immobilised.

3. An assembly according to claim 2 **characterised in that** the movement of the drive means is stopped instantaneously upon receiving a signal from the sensing means.

4. An assembly according to claim 1 **characterised in that** the sensing means are provided to be operative substantially continuously across the width of the platform.

5. An assembly according to claim 1 **characterised in that** the sensing means are positioned so as to sense the presence of a person or article at or in proximity to the edge of the platform which is adjacent to the vehicle.

6. An assembly according to claim 5 **characterised in that** the sensing means is offset from the edge by a predetermined distance.

7. An assembly according to claim 1 **characterised in that** the sensing means are activated by the application of pressure thereon.

8. An assembly according to claim 1 **characterised in that** the sensing means are substantially flush with the top surface of the platform.

9. An assembly according to claim 1 **characterised in that** the platform is manufactured from aluminium extrusions joined edge to edge and at least one extrusion includes a recessed channel in which the sensing means are located and retained.

10. An assembly according to claim 1 **characterised in that** the platform is formed from sheet material and a channel or location means for the sensing means is formed on the platform fabrication.

11. An assembly according to claim 1 **characterised in that** the signal transmitted from the sensing means is an electrical data signal which passes to the control means via a cable connection or remote signal transmission.

12. An assembly according to claim 1 **characterised in that** the drive means is a hydraulic drive with a hydraulic control system which is stopped once a signal is received from the sensing means.

13. An assembly according to claim 1 **characterised in that** the sensing means comprises an elongate member or series of portions so provided to form an elongate member.

14. An assembly according to claim 13 **characterised in that** the elongate member has a housing along the length thereof for the reception of electrical contact means.

15. An assembly according to claim 1 wherein the platform is fitted to a goods vehicle and at an opening into the goods storage area.

16. An assembly according to claim 15 **characterised in that** the goods storage area is integral with the vehicle.

17. An assembly according to claim 15 **characterised in that** the goods storage area is a trailer couple to a tractor unit to form the vehicle.

18. An assembly according to any of the preceding claims
